# EUROPÄISCHE PATENTSCHRIFT

(11) **EP 1 878 893 B1**
(45) Veröffentlichungstag und Bekanntmachung des Hinweises auf die Patenterteilung: **30.12.2009**
(21) Anmeldenummer: 07013332.7
(22) Anmeldetag: 07.07.2007
(51) Int. Cl.: F02B 37/007

(54) **Abgasturboladeranordnung**
Exhaust gas turbo charger assembly
Agencement de turbosoufflante de gaz d'échappement

(30) Priorität: 13.07.2006 DE 102006032585
(43) Veröffentlichungstag der Anmeldung: 16.01.2008
(73) Patentinhaber: Bayerische Motoren Werke Aktiengesellschaft, 80809 München (DE)
(72) Erfinder: Barth, Wilfried, 4351 Saxen (AT); Gruber, Gerald, 4865 Nussdorf (AT); Brüne, Hans-Jürgen, 3350 Haag (AT)

(56) Entgegenhaltungen:
- EP-A- 1 382 816
- DE-A1- 19 809 854
- DE-C1- 3 908 286
- GB-A- 1 220 296
- JP-A- 3 070 818
- US-A1- 2002 056 444

## Beschreibung

Die Erfindung betrifft eine Abgasturboladeranordnung mit den Merkmalen aus dem Oberbegriff des Patentanspruchs 1.

Sie geht von der deutschen Offenlegungsschrift DE 198 22 874 A1 aus, in der ein Aufladesystem für Brennkraftmaschinen beschrieben ist. Zur Behebung von Mängeln von Turboladern im instationären Betrieb, beispielsweise dem sog. Turboloch, werden zwei Turbolader vorgesehen, welche wahlweise in Reihe oder parallel geschaltet werden. Um dem begrenzten Bauraum beim Einbau in Fahrzeugen und einem vertretbaren Kostenaufwand Rechnung zu tragen, wird in der DE 198 22 874 A1 vorgeschlagen, die zwei Abgasturbolader abgasseitig in ein gemeinsames Gehäuse zu integrieren. Der Abströmkanal des ersten Abgasturboladers wird dabei über einen in das Gehäuse integrierten zweiten Überströmkanal mit dem zweiten Zuströmkanal des zweiten Abgasturboladers verbunden. Zur Regelung der Verteilung des Abgases auf die Lader ist weiter ein Klappenventil in dem Gehäuse vorgesehen. Durch die bauliche Vereinigung der zwei Abgasturbolader in ein einziges Gehäuse wird somit Bauraum eingespart und der bauliche Aufwand mit den damit verbundenen Kosten minimiert.

Aus der EP 1 382 816 A2, von der diese Erfindung ausgeht, ist eine Abgasturboladeranordnung für eine Brennkraftmaschine, mit einem ersten Abgasturbolader mit einer ersten Turbine und einem zweiten Abgasturbolader mit einer zweiten Turbine bekannt. Die erste und die zweite Turbine sind in einem gemeinsamen Turbinengehäuse angeordnet und gleichzeitig mit dem Abgas der Brennkraftmaschine beaufschlagbar, wobei der ersten Turbine eine erste Abgaszuführöffnung, der zweiten Turbine eine zweite Abgaszuführöffnung und beiden Turbinen eine gemeinsame Abgasabführöffnung in dem Turbinengehäuse zugeordnet sind. Weiter sind die erste und die zweite Abgaszuführöffnung sowie die Abgasabführöffnung parallel zueinander angeordnet.

Um eine gattungsgemäße Abgasturboladeranordnung auch für eine zweistufige Abgasturboaufladung einsetzen zu können, muss ein Weg zu einer noch weiteren baulichen Vereinfachung aufgezeigt werden.

Aufgabe der vorliegenden Erfindung ist es, eine Maßnahme aufzuzeigen, wie die Baugröße einer gattungsgemäßen Turboladeranordnung noch weiter verringert werden kann.

Diese Aufgabe wird erfindungsgemäß durch das Merkmal im kennzeichnenden Teil des Patentanspruchs 1 gelöst.
Durch die erfindungsgemäße Ausgestaltung ist darüber hinaus eine äußerst einfache Abdichtung der Abgaszuführöffnungen und der Abgasabführöffnung realisiert und der Abdichtungsaufwand nochmals minimiert.

Die Ausgestaltungen gemäß der Patentansprüche 2 und 3 sind zwei besonders bevorzugte Ausführungsvarianten.

Eine äußerst kompakte Bauform wird auch durch die Merkmale im kennzeichnenden Teil des Patentanspruchs 4 erzielt.

Mit der Ausgestaltung gemäß Patentanspruch 5 wird eine Turbine schaltbar ausgestaltet, wodurch eine höhere Dynamik der Abgasturboladeranordnung erzielt ist.

Mit der Ausgestaltung gemäß Patentanspruch 6 wird der Fertigungsaufwand für eine erfindungsgemäße Abgasturboladeranordnung reduziert.

Die Ausgestaltungen gemäß der Patentansprüche 7 und 8 sind besonders bevorzugte Ausführungsvarianten.

Mit der Ausgestaltung gemäß Patentanspruch 9 ist in vorteilhafter Weise eine mehrstufige Abgasturboladeraufladung für eine Brennkraftmaschine realisiert.

Im Folgenden ist die Erfindung anhand eines bevorzugten Ausführungsbeispieles in fünf Figuren näher erläutert.
- Fig. 1: zeigt die Aufsicht auf eine dreidimensional dargestellte erfindungsgemäße Abgasturboladeranordnung;
- Fig. 2: zeigt den Blick auf einen Montageflansch der Abgasturboladeranordnung;
- Fig. 3: zeigt eine Seitenansicht auf die erfindungsgemäße Abgasturboladeranordnung;
- Fig. 4: zeigt einen Schnitt A-A aus Fig. 2 durch die Abgasturboladeranordnung;
- Fig. 5: zeigt einen Schnitt B-B aus Fig. 1 durch die Abgasturboladeranordnung.

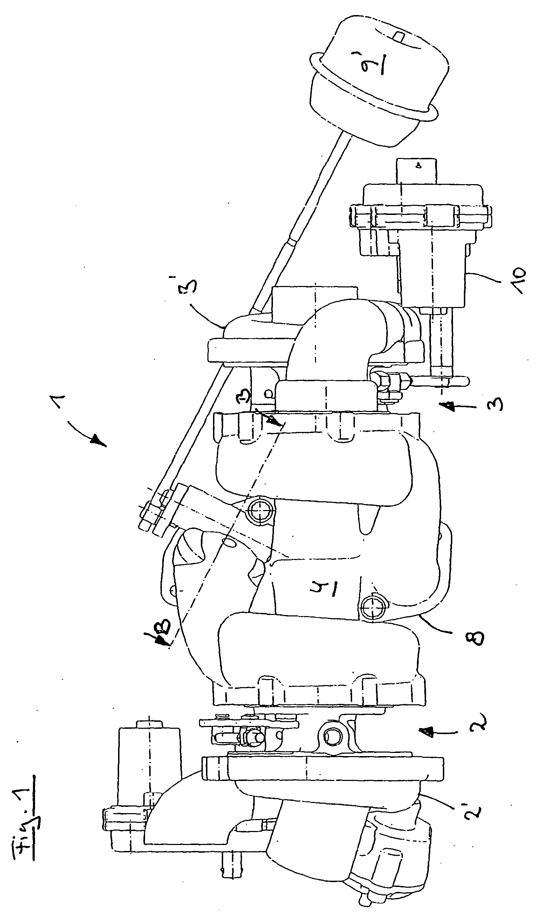

Für gleiche Bauteile gelten in den Figuren 1 bis 5 die gleichen Bezugszeichen.

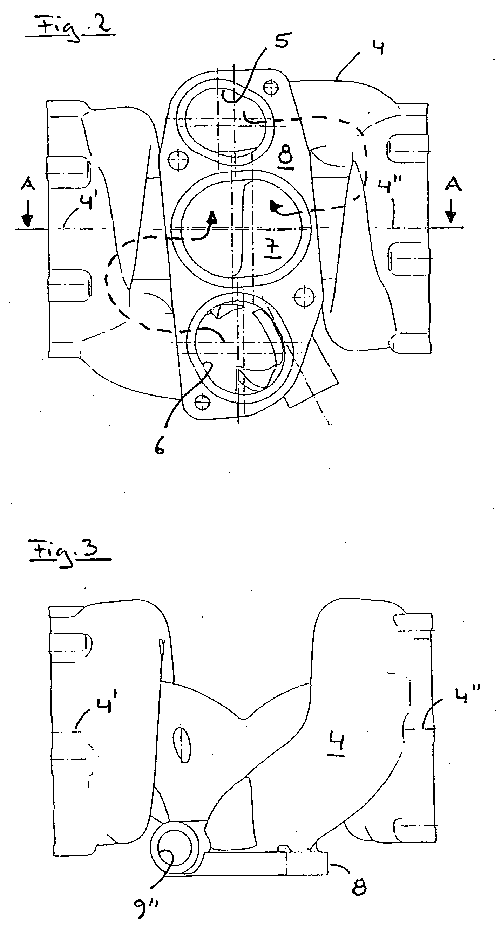

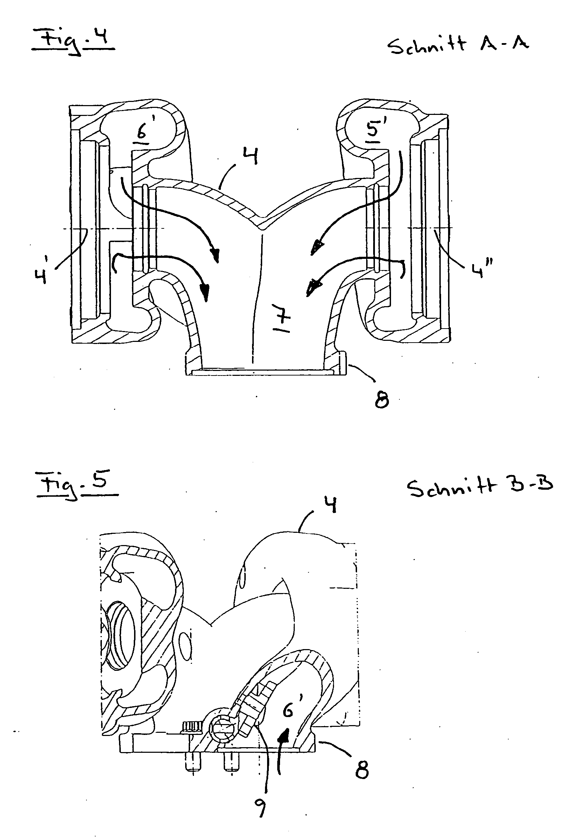

Fig. 1 zeigt die Aufsicht auf eine dreidimensional dargestellte erfindungsgemäße Abgasturboladeranordnung 1. Die Abgasturboladeranordnung 1 umfasst einen ersten Abgasturbolader 2 mit einem ersten Verdichtergehäuse 2' und einen zweiten Abgasturbolader 3 mit einem zweiten Verdichtergehäuse 3'. Eine erste, in Fig. 1 nicht erkennbare Turbine des ersten Abgasturboladers 2 sowie eine zweite, ebenfalls in Fig. 1 nicht erkennbare Turbine des zweiten Abgasturboladers 3 sind in einem gemeinsamen Turbinengehäuse 4 angeordnet. Im Hintergrund des Turbinengehäuses 4 ist ein Montageflansch 8 angeordnet, mit einer in Fig. 2 dargestellten ersten Abgaszuführöffnung 5, einer zweiten Abgaszuführöffnung 6 sowie einer Abgasabführöffnung 7. In einem in Fig. 1 ebenfalls nicht erkennbaren zweiten Abgaseinlauf 6' ist ein, in Fig. 5 dargestelltes, entsprechend dem Schnitt B-B in Fig. 1, Verschlusselement 9 angeordnet, für welches ein erstes Stellelement 9' vorgesehen ist. Darüber hinaus ist an den zweiten Abgasturbolader 3 ein zweites Stellelement 10 angeordnet.

Fig. 2 zeigt eine Aufsicht auf den Montageflansch 8 mit der ersten Abgaszuführöffnung 5, der zweiten Abgaszuführöffnung 6 sowie der dazwischen liegenden Abgasabführöffnung 7. Die Abgasführung durch das Turbinengehäuse 4 ist mit zwei gestrichelten Linien schematisch dargestellt. Das Abgas tritt durch die erste Abgaszuführöffnung 5 sowie die zweite Abgaszuführöffnung 6 in das Turbinengehäuse 4 ein, strömt weiter durch schneckenförmige Strömungskanäle radial um die nicht dargestellten Turbinen des ersten Abgasturboladers 3 und des zweiten Abgasturboladers 4, treibt diese an und verlässt von dort aus das Turbinengehäuse 4 durch die Abgasabführöffnung 7. Die schneckenartigen Strömungskanäle um die Turbinen sind in Fig. 4 als erster Abgaseinlauf 5' und zweiter Abgaseinlauf 6' beziffert. In Fig. 4 ist ein Schnitt durch das Turbinengehäuse 4 entlang der Linien A-A in Fig. 2 dargestellt. Der Schnitt A-A erstreckt sich weitgehend entlang einer ersten, strichpunktiert dargestellten Drehachse 4' der ersten Turbine und einer zweiten, strichpunktiert dargestellten Drehachse 4" der zweiten Turbine. Die Drehachsen 4', 4" sind parallel zueinander angeordnet.

In Fig. 3 ist eine Seitenansicht auf das Turbinengehäuse 4 dargestellt, gegenüber Fig. 2 um 90° um die erste bzw. die zweite Drehachse 4' 4" gedreht. In Fig. 3 ist der Montageflansch 8 von der Seite erkennbar. Zwischen dem Turbinengehäuse 4 und dem Montageflansch 8 befindet sich eine Bohrung 9" zur Aufnahme einer nicht dargestellten Verdrehwelle des Verschlusselementes 9.

Fig. 4 zeigt, wie oben bereits erwähnt, den Schnitt A-A aus Fig. 2 durch das Turbinengehäuse 4. Die erste Drehachse 4' und die zweite Drehachse 4" sind ebenfalls strichpunktiert dargestellt und radial außen um die erste und die zweite Drehachse 4', 4" sind der erste Abgaseinlauf 5' und der zweite Abgaseinlauf 6' erkennbar, die sich spiralförmig um die nicht dargestellten Turbinen erstrecken. Ein Gasstrom des Abgases ist wiederum schematisch durch vier Pfeile dargestellt, in Richtung der Abgasabführöffnung 7.

Fig. 5 zeigt einen Schnitt B-B aus Fig. 1, wobei das Verschlusselement 9 geschnitten dargestellt ist. Ersichtlich in Fig. 5 ist auch, wie der zweite Abgaseinlauf 6' von dem Verschlusselement 9 verschließbar ist.

Erfindungsgemäß sind die erste und die zweite Abgaszuführöffnung 5, 6 und die Abgasabführöffnung 7 parallel zueinander ausgerichtet. In dem vorliegenden konkreten Ausführungsbeispiel bedeutet dies, dass die erste Abgaszuführöffnung 5, die zweite Abgaszuführöffnung 6 und die Abgasabführöffnung 7 in einer einzigen Ebene liegen. In nicht erfindungsgemäßen Beispielen ist es jedoch auch möglich, die erste und die zweite Abgaszuführöffnung 5, 6 in zumindest einer anderen Ebene als die Abgasabführöffnung 7 anzuordnen. Durch die vollkommen plane Ausgestaltung im vorliegenden Ausführungsbeispiel ist jedoch die Dichtheit wesentlich verbessert.

Im vorliegenden Ausführungsbeispiel weisen die erste und die zweite Abgaszuführöffnung 5, 6 und die Abgasabführöffnung 7 einen gemeinsamen Montageflansch auf, jedoch ist es auch möglich, für jede Öffnung 5, 6, 7 jeweils einen separaten Montageflansch 8 vorzusehen. Durch die gemeinsame Anordnung in einem einzigen Montageflansch 8 ist wiederum auf einfache Art und Weise eine hohe Dichtheit erzielt.

Vorzugsweise ist der Montageflansch 8 direkt an einen Abgaskrümmer der Brennkraftmaschine anordenbar. In diesem Fall wird der bauliche Aufwand minimiert.

Ferner ist in dem vorliegenden Ausführungsbeispiel die zweite Abgaszuführöffnung von dem Verschlusselement 9 verschließbar, in anderen Ausführungsbeispielen ist es auch möglich, beide Abgaszuführöffnungen 5, 6 verschließbar auszugestalten. In dem vorliegenden Ausführungsbeispiel sind ferner die erste und die zweite Drehachse 4', 4" voneinander beabstandet parallel zueinander angeordnet. In einem anderen Ausführungsbeispiel können die erste und die zweite Drehachse 4', 4" auch überlappend sein. Diese Ausgestaltung ist fertigungstechnisch besonders vorteilhaft.

Das Turbinengehäuse 4 und der Montageflansch 8 sind in dem besonders bevorzugten Ausführungsbeispiel einstückig und materialeinheitlich als ein einziges Gussteil ausgeführt. Jedoch ist es auch möglich, den Montageflansch 8 aus einem anderen Material herzustellen als das Turbinengehäuse 4. Auch Verbundtechniken zwischen Gussteil und luftspaltisolierter Bauweise in Blech sind möglich.

Wird die Abgasabführöffnung 7 mit einer dritten Turbine eines dritten Abgasturboladers abgasführend verbunden, ist mit der erfindungsgemäßen Abgasturboladeranordnung 1 auch eine Stufenaufladung möglich. Eine derartige Stufenaufladung ist beispielsweise in der europäischen Patentschrift EP 0 377 712 B1 beschrieben.

Durch den vorgeschlagenen Verbundguss für beide Hochdruckturbinengehäuse aus dem Stand der Technik ist eine extrem kompakte Anordnung möglich. Weiter reduziert ein Zusammenführen der Abgasabführöffnungen der Turbinenaustritte zu einem einzigen Kanal die Flanschgröße und dadurch den Abdichtaufwand zum Auspuffkrümmer hin. Durch die Verbundgussvariante werden Kosten und Gewicht verringert. Weiter wird durch den verringerten Abdichtaufwand die Funktion bzw. die Lebensdauer verbessert.

### Bezugszeichenliste:

- 1.: Abgasturboladeranordnung
- 2.: Erster Abgasturbolader
- 2': Erstes Verdichtergehäuse
- 3.: Zweiter Abgasturbolader
- 3': Zweites Verdichtergehäuse
- 4.: Turbinengehäuse
- 4': Erste Drehachse
- 4": Zweite Drehachse
- 5.: Erste Abgaszuführöffnung
- 5': Erster Abgaseinlauf
- 6.: Zweite Abgaszuführöffnung
- 6': Zweiter Abgaseinlauf
- 7.: Abgasabführöffnung
- 8.: Montageflansch
- 9.: Verschlusselement
- 9'.: Erstes Stellelement
- 9": Bohrung
- 10.: Zweites Stellelement

## Patentansprüche

1. Abgasturboladeranordnung (1) für eine Brennkraftmaschine, mit einem ersten Abgasturbolader (2) mit einer ersten Turbine und einem zweiten Abgasturbolader (3) mit einer zweiten Turbine, wobei die erste und die zweite, in einem gemeinsamen Turbinengehäuse (4) angeordneten Turbinen gleichzeitig mit einem Abgas der Brennkraftmaschine beaufschlagbar sind, wobei der ersten Turbine eine erste und der zweiten Turbine eine zweite Abgaszuführöffnung (5, 6) und beiden Turbinen eine gemeinsame Abgasabführöffnung (7) in dem Turbinengehäuse (4) zugeordnet sind und wobei die erste und die zweite Abgaszuführöffnung (5, 6) und die Abgasabführöffnung (7) parallel zueinander angeordnet sind,
**dadurch gekennzeichnet, dass** von der ersten und der zweiten Abgaszuführöffnung (5, 6) und der Abgasabführöffnung (7) eine einzige Ebene aufgespannt ist.

2. Abgasturboladeranordnung nach Patentanspruch 1,
**dadurch gekennzeichnet, dass** der ersten und der zweiten Abgaszuführöffnung (5, 6) und der Abgasabführöffnung (7) ein gemeinsamer Montageflansch (8) zugeordnet ist.

3. Abgasturboladeranordnung nach Patentanspruch 1,
**dadurch gekennzeichnet, dass** der ersten und der zweiten Abgaszuführöffnung (5, 6) und der Abgasabführöffnung (7) jeweils ein separater Montageflansch zugeordnet ist.

4. Abgasturboladeranordnung nach Patentanspruch 2,
**dadurch gekennzeichnet, dass** der Montageflansch (8) an einen Abgaskrümmer der Brennkraftmaschine anordenbar ist.

5. Abgasturboladeranordnung nach einem der zuvor genannten Patentansprüche,
**dadurch gekennzeichnet, dass** eine Abgaszuführöffnung (5, 6) von einem Verschlusselement (9) verschließbar ist.

6. Abgasturboladeranordnung nach einem der zuvor genannten Patentansprüche, wobei die erste und die zweite Turbine eine erste und eine zweite Drehachse (4', 4") aufweisen,
**dadurch gekennzeichnet, dass** die erste und die zweite Drehachse (4', 4") parallel zueinander sind.

7. Abgasturboladeranordnung nach einem der zuvor genannten Patentansprüche,
**dadurch gekennzeichnet, dass** das Turbinengehäuse (4) und der Montageflansch (8) einstückig und materialeinheitlich sind.

8. Abgasturboladeranordnung nach einem der zuvor genannten Patentansprüche,
**dadurch gekennzeichnet, dass** das Turbinengehäuse (4) ein Gussteil ist.

9. Abgasturboladeranordnung nach einem der zuvor genannten Patentansprüche,
**dadurch gekennzeichnet, dass** die Abgasabführöffnung (7) mit einer dritten Turbine eines dritten Abgasturboladers abgasführend verbunden ist.

## Claims

1. An exhaust gas turbocharger arrangement (1) for an internal combustion engine, comprising a first exhaust gas turbocharger (2) with a first turbine and a second exhaust gas turbocharger (3) with a second turbine, wherein the first and the second turbines arranged in a common turbine housing (4) can be simultaneously loaded with an exhaust gas of the internal combustion engine, a first exhaust gas supply opening (5) being associated with the first turbine and a second exhaust gas supply opening (6) being associated with the second turbine, and a common exhaust gas discharge opening (7) being associated with the two turbines in the turbine housing (4) and the first and the second exhaust gas supply opening (5, 6) and the exhaust gas discharge opening (7) being arranged parallel to one another, **characterised in that** a single plane is spanned by the first and the second exhaust gas supply opening (5, 6) and the exhaust gas discharge opening (7).

2. An exhaust gas turbocharger arrangement according to claim 1, **characterised in that** a common assembly flange (8) is associated with the first and the second exhaust gas supply opening (5, 6) and the exhaust gas discharge opening (7).

3. An exhaust gas turbocharger arrangement according to claim 1, **characterised in that** a respective separate assembly flange is associated with the first and the second exhaust gas supply opening (5, 6) and the exhaust gas discharge opening (7).

4. An exhaust gas turbocharger arrangement according to claim 2, **characterised in that** the assembly flange (8) can be arranged on an exhaust gas bend of the internal combustion engine.

5. An exhaust gas turbocharger arrangement according to any one of the previously mentioned claims, **characterised in that** an exhaust gas supply opening (5, 6) can be closed by a closure element (9).

6. An exhaust gas turbocharger arrangement according to any one of the previously mentioned claims, wherein the first and the second turbine have a first and a second rotational axis (4', 4"), **characterised in that** the first and the second rotational axis (4', 4") are parallel to one another.

7. An exhaust gas turbocharger arrangement according to any one of the previously mentioned claims, **characterised in that** the turbine housing (4) and the assembly flange (8) are in one piece and of the same material.

8. An exhaust gas turbocharger arrangement according to any one of the previously mentioned claims, **characterised in that** the turbine housing (4) is a cast part.

9. An exhaust gas turbocharger arrangement according to any one of the previously mentioned claims, **characterised in that** the exhaust gas discharge opening (7) is connected, for the guidance of exhaust gas, to a third turbine of a third exhaust gas turbocharger.

## Revendications

1. Agencement de turbocompresseurs de gaz d'échappement (1) de moteur à combustion comprenant :
- un premier turbocompresseur de gaz d'échappement (2) ayant une première turbine, et
- un second turbocompresseur de gaz d'échappement (3) ayant une seconde turbine,
- la première et la seconde turbine étant logées dans un carter de turbine (4), commun, pour recevoir en même temps les gaz d'échappement du moteur à combustion,
- la première turbine ayant un premier orifice d'alimentation de gaz d'échappement (5) et la seconde turbine ayant un second orifice d'alimentation en gaz d'échappement (6), et les deux turbines ont un orifice de sortie de gaz d'échappement (7) commun dans le carter de turbine (4), et
- le premier et le second orifice d'alimentation en gaz d'échappement (5, 6) et l'orifice de sortie des gaz d'échappement (7) étant parallèles,
**caractérisé en ce que**
le premier et le second orifice d'alimentation en gaz d'échappement (5, 6) et l'orifice d'évacuation des gaz d'échappement (7) sont situés dans un même plan.

2. Agencement de turbocompresseurs de gaz d'échappement selon la revendication 1,
**caractérisé en ce qu'**
une bride de montage (8) commune est prévue pour le premier et le second orifice d'alimentation en gaz d'échappement (5, 6) et pour l'orifice d'évacuation de gaz d'échappement (7).

3. Agencement de turbocompresseurs de gaz d'échappement selon la revendication 1,
**caractérisé en ce qu'**
une bride de montage distincte est prévue pour le premier et le second orifice d'alimentation en gaz d'échappement (5, 6) et pour l'orifice d'évacuation de gaz d'échappement (7).

4. Agencement de turbocompresseurs de gaz d'échappement selon la revendication 2,
**caractérisé en ce que**
la bride de montage (8) est portée par un collecteur de gaz d'échappement du moteur à combustion.

5. Agencement de turbocompresseurs de gaz d'échappement selon les revendications précédentes,
**caractérisé en ce qu'**
un orifice d'alimentation en gaz d'échappement (5, 6) se ferme à l'aide d'un élément de fermeture (9).

6. Agencement de turbocompresseurs de gaz d'échappement selon les revendications précédentes,
la première et la seconde turbine ayant un premier et un second axe de rotation (4', 4"),
**caractérisé en ce que**
le premier et le second axe de rotation (4', 4") sont parallèles.

7. Agencement de turbocompresseurs de gaz d'échappement selon les revendications précédentes,
**caractérisé en ce que**
le carter de turbine (4) et la bride de montage (8) sont en une seule pièce réalisée dans la même matière.

8. Agencement de turbocompresseurs de gaz d'échappement selon les revendications précédentes,
**caractérisé en ce que**
le carter de turbine (4) est une pièce de fonte.

9. Agencement de turbocompresseurs de gaz d'échappement selon les revendications précédentes,
**caractérisé en ce que**
l'orifice d'évacuation des gaz d'échappement (7) est relié à une troisième turbine d'un troisième turbocompresseur de gaz d'échappement dans le sens de l'évacuation des gaz d'échappement.
